# FASCICULE DE BREVET EUROPEEN

(11) **EP 4 311 763 B1**
(45) Date de publication et mention de la délivrance du brevet: **02.04.2025**
(21) Numéro de dépôt: 23183235.3
(22) Date de dépôt: 04.07.2023
(51) Int. Cl.: B64C 1/18

(54) **PLANCHER D'AÉRONEF COMPRENANT UNE BÂCHE D'ÉTANCHÉITÉ ET AÉRONEF COMPRENANT LEDIT PLANCHER**
FLUGZEUGBODEN MIT EINER DICHTUNGSPLANE UND FLUGZEUG MIT DIESEM BODEN
AIRCRAFT FLOOR COMPRISING A SEALING TARPAULIN AND AIRCRAFT COMPRISING SAID FLOOR

(30) Priorité: 26.07.2022 FR 2207640
(43) Date de publication de la demande: 31.01.2024
(73) Titulaire: AIRBUS OPERATIONS (S.A.S.), 31060 Toulouse (FR)
(72) Inventeur: PELLIZZON, Sébastien, 31060 TOULOUSE (FR)
(74) Mandataire: Fantin, Laurent

(56) Documents cités:
- EP-A2- 2 113 456
- WO-A1-2018/048946
- CN-A- 105 923 144

## Description

La présente demande se rapporte à un plancher d'aéronef comprenant une bâche d'étanchéité ainsi qu'à un aéronef comprenant ledit plancher.

Des planchers d'aéronef sont connus des documents EP2113456 A2 et WO2018/048946 A1.

Selon un mode de réalisation, un aéronef comprend un fuselage ainsi qu'un plancher scindant l'intérieur du fuselage en une zone supérieure et une zone inférieure. Selon un aménagement, l'aéronef comprend une soute avionique située dans la zone inférieure, dans laquelle sont positionnés des équipements électriques et électroniques, ainsi qu'une cabine de toilette comprenant des toilettes et un évier, située dans la zone supérieure, au-dessus de la soute avionique.

Selon une configuration, le plancher comporte une structure et des panneaux juxtaposés, rapportés sur la structure. La cabine de toilette étant une zone humide, au niveau de laquelle de l'eau peut être répandue au sol, l'ensemble des panneaux juxtaposés forme une première barrière d'étanchéité. Pour limiter tous risques d'écoulement sur les équipements électriques et électroniques, l'aéronef comprend une deuxième barrière d'étanchéité.

Selon un premier mode de réalisation, la deuxième barrière comprend plusieurs plaques rigides, distantes du plancher, coiffant les équipements électriques et électroniques. Ce premier mode de réalisation n'est pas optimal car il peut difficilement être mis en œuvre lorsque la soute avionique est très encombrée et induit une augmentation significative de la masse embarquée.

Selon un deuxième mode de réalisation, la deuxième barrière comprend plusieurs plaques de protection rigides, intercalées entre les panneaux du plancher et la structure. Ce deuxième mode de réalisation n'est pas optimal car les plaques de protection augmentent significativement la masse embarquée.

La présente invention vise à remédier à tout ou partie des inconvénients de l'art antérieur.

A cet effet, l'invention a pour objet un plancher d'aéronef comprenant une structure, un platelage rapporté sur la structure ainsi que des première et deuxième barrières d'étanchéité superposées au moins au droit d'une zone de protection, le platelage étant configuré pour former la première barrière d'étanchéité au moins au droit de la zone de protection, la structure du plancher comportant des poutres transversales orientées perpendiculairement à une direction longitudinale, espacées entre elles, ainsi que des renforts longitudinaux orientés parallèlement à la direction longitudinale, espacés entre eux, rapportés sur les poutres transversales.

Selon l'invention, la deuxième barrière d'étanchéité comprend une bâche d'étanchéité intercalée entre le platelage et la structure, comportant plusieurs bandes de renfort fixées contre une face de la bâche d'étanchéité orientée vers la structure, au moins certaines bandes de renfort étant intercalées entre la bâche d'étanchéité et les renforts longitudinaux de la structure du plancher.

L'utilisation d'une bâche d'étanchéité permet de réduire la masse et les coûts de la deuxième barrière d'étanchéité par rapport aux plaques de protection de l'art antérieur.

Selon d'autres caractéristiques prises isolément ou en combinaison :
- les bandes de renfort sont rigides ou semi-rigides ;
- la bâche d'étanchéité s'étend de manière continue sur toute la zone de protection ;
- la bâche d'étanchéité comprend au moins un pli tissé enduit d'une matière plastique.

Selon une autre caractéristique, au moins une bande de renfort comprend des orifices traversants.

L'invention a également pour objet un aéronef comprenant un plancher selon l'une des caractéristiques précédentes.

Selon une autre caractéristique, l'aéronef comprend une soute avionique située sous le plancher, la zone de protection étant située au-dessus de la soute avionique.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe longitudinale d'une pointe avant d'un aéronef,
- La figure 3 est une vue en perspective d'une pointe avant d'un aéronef illustrant un mode de réalisation de l'invention,
- La figure 4 est une coupe longitudinale d'une partie d'un plancher d'aéronef illustrant un mode de réalisation de l'invention,
- La figure 5 est une vue de face d'une bâche d'étanchéité d'un plancher d'aéronef illustrant un mode de réalisation de l'invention.

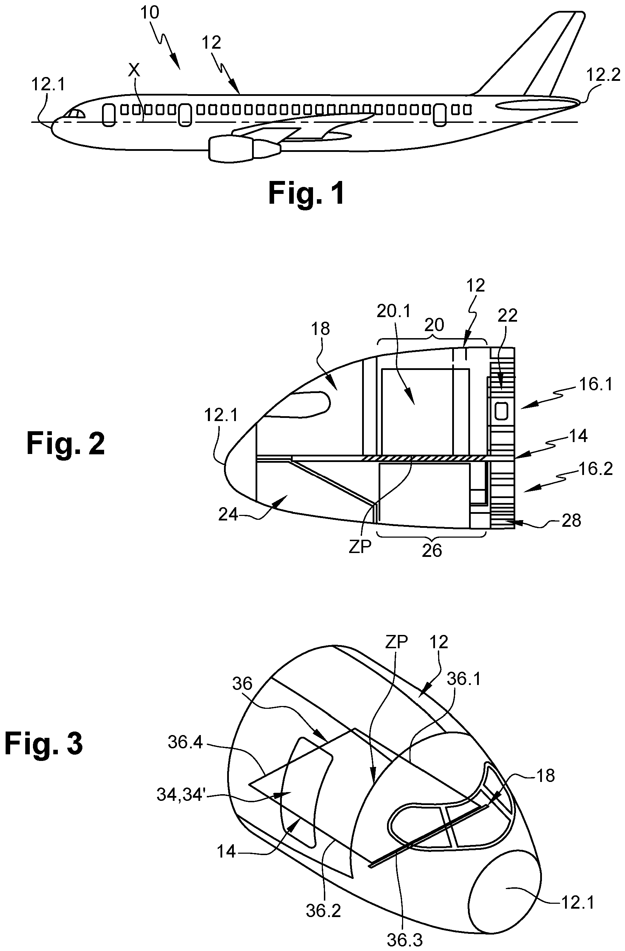

Selon un mode de réalisation visible sur les figures 1 à 3, un aéronef 10 comprend un fuselage 12 qui s'étend entre une pointe avant 12.1 et une pointe arrière 12.2 ainsi qu'un plancher 14 délimitant dans le fuselage 12 une zone supérieure 16.1 située au-dessus du plancher 14 et une zone inférieure 16.2 située au-dessous du plancher 14.

Pour la suite de la description, une direction longitudinale X correspond à une direction qui passe approximativement par la pointe avant 12.1 et la pointe arrière 12.2 et qui est sensiblement horizontale lorsque l'aéronef est au sol. Un plan transversal est un plan perpendiculaire à la direction longitudinale.

Selon un aménagement, la zone supérieure 16.1 du fuselage 12 comprend, à partir de la pointe avant 12.1 en direction de la pointe arrière 12.2, une cabine de pilotage 18, une zone intermédiaire 20 et une cabine de passagers 22. La zone intermédiaire 20 comprend entre autres une cabine de toilette 20.1 dans laquelle sont prévus des toilettes et un évier par exemple.

La zone inférieure 16.2 comprend, à partir de la pointe avant 12.1 en direction de la pointe arrière 12.2, une case de train d'atterrissage 24, une soute avionique 26 et une soute à bagages 28. La soute avionique 26 comprend entre autres des équipements électriques et électroniques.

Selon cet aménagement, la zone intermédiaire 20 est située au moins partiellement au-dessus de la soute avionique 26.

Bien entendu, l'invention n'est pas limitée à cet aménagement.

Selon un mode de réalisation, le plancher 14 comprend une structure 30 et un platelage 32 rapporté sur la structure 30.

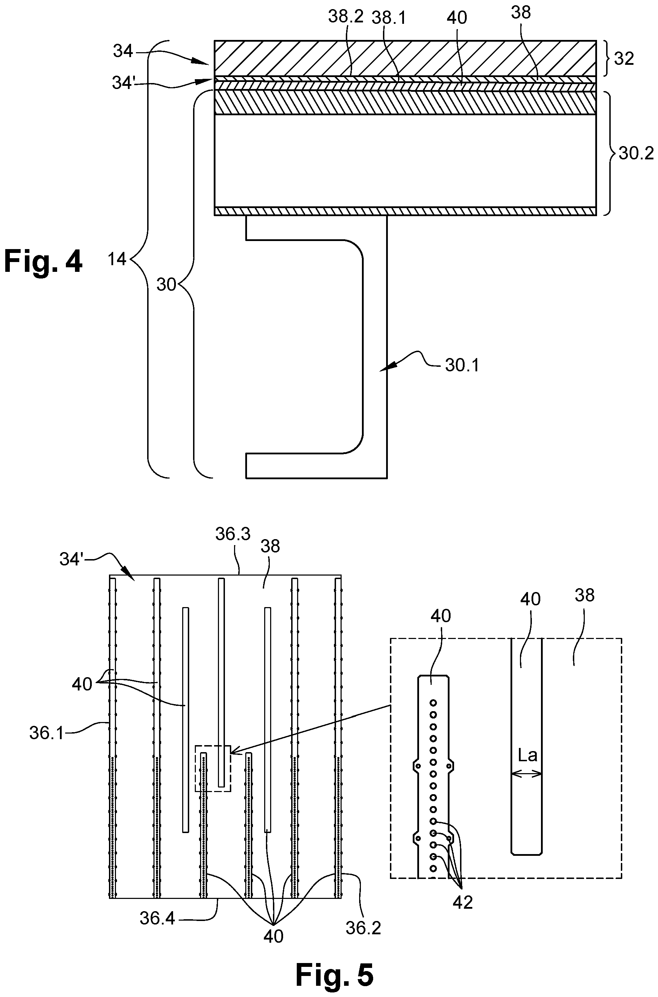

Comme illustré sur la figure 4, la structure 30 comprend des poutres transversales 30.1 orientées perpendiculairement à la direction longitudinale X, espacées entre elles, ainsi que des renforts longitudinaux 30.2 (également appelés rails) orientés parallèlement à la direction longitudinale X, espacés entre eux, rapportés sur les poutres transversales 30.1 et reliés à ces dernières.

Chaque poutre transversale 30.1 présente des première et deuxième extrémités reliées à la structure du fuselage 12.

A titre d'exemple, les poutres transversales 30.1 présentent chacune une section en C et les renforts longitudinaux 30.2 présentent chacun une section en I.

La structure 30 du plancher 14 n'est pas plus décrite car elle peut être identique à celles de l'art antérieur.

Le platelage 32 comprend un ensemble de panneaux juxtaposés. Chaque panneau du platelage 32 est rigide et étanche. Il peut être réalisé en différents matériaux.

Bien entendu, l'invention n'est pas limitée à ce mode de réalisation pour le platelage 32.

Le plancher 14 comprend des première et deuxième barrières d'étanchéité 34, 34' superposées au moins au droit d'une zone de protection ZP (visible sur les figures 2 et 3). Le plancher 14 peut comprendre une ou plusieurs zone(s) de protection ZP. L'une d'elles est située au-dessus de la soute avionique 26. Cette zone de protection ZP est délimitée par un pourtour 36.

Selon un agencement, le pourtour 36 comprend des premier et deuxième bords longitudinaux 36.1, 36.2, approximativement parallèles entre eux et à la direction longitudinale X, ainsi que des premier et deuxième bords transversaux 36.3, 36.4, parallèles entre eux et perpendiculaires à la direction longitudinale.

Les premier et deuxième bords longitudinaux 36.1, 36.2 peuvent être accolés au fuselage 12 ou être distants de ce dernier.

Bien entendu, l'invention n'est pas limitée à cette géométrie pour la zone de protection ZP. Le platelage 32 est configuré pour former la première barrière d'étanchéité 34 sensiblement étanche, au moins au droit de la zone de protection ZP.

Selon une configuration, la deuxième barrière d'étanchéité 34' s'étend sur toute la surface du plancher 14. Selon une autre configuration, la deuxième barrière d'étanchéité 34' s'étend seulement sur la zone de protection ZP. Quelle que soit la configuration, la deuxième barrière d'étanchéité 34' s'étend au moins sur la zone de protection ZP.

Selon une particularité de l'invention, la deuxième barrière d'étanchéité 34' comprend une bâche d'étanchéité 38, intégrée dans le plancher 14 et positionnée sous le platelage 32. Selon une configuration, la bâche d'étanchéité 38 est intercalée entre le platelage 32 et la structure 30, comme illustré sur la figure 4. Selon un mode de réalisation, la bâche d'étanchéité 38 s'étend de manière continue sur toute la zone de protection ZP.

La bâche d'étanchéité 38 est souple et étanche. Selon un mode de réalisation, la bâche d'étanchéité 38 comprend au moins un pli tissé enduit d'une matière plastique, comme du polychlorure de vinyle, du polyuréthane, du polyéthylène ou autres. Le tissé peut être réalisé à partir de fibres de polyester, de verre, d'aramide ou autres. Par enduit, on entend que la matière plastique est présente sur au moins une face du tissé.

A titre d'exemple, la bâche d'étanchéité 38 est réalisée dans le même matériau que les bâches de protection utilisées pour protéger et fermer les entrées d'air des nacelles d'avion.

Pour donner un ordre de grandeur, la bâche d'étanchéité 38 présente une épaisseur inférieure à 3 mm.

A surface égale, la bâche d'étanchéité 38 a une masse nettement inférieure aux plaques de protection rigides de l'art antérieur.

Cette bâche d'étanchéité 38 comprend une première face 38.1 orientée vers la structure 30 ainsi qu'une deuxième face 38.2 orientée vers le platelage 32.

Comme illustré sur la figure 5, la deuxième barrière d'étanchéité 34' comprend au moins une bande de renfort 40 rapportée contre au moins une face parmi les première et deuxième faces 38.1, 38.2 de la bâche d'étanchéité 38 pour la renforcer.

Ces bandes de renfort 40 peuvent être rigides ou semi-rigides. A titre indicatif, les bandes de renfort 40 sont réalisées en polycarbonate. Elles sont collées contre la bâche d'étanchéité 38. Selon une configuration, les bandes de renfort 40 sont fixées contre la première face 38.1 de la bâche d'étanchéité 38.

A titre indicatif, les bandes de renfort 40 ont une largeur La comprise entre 2 et 10 cm et sont orientées parallèlement à la direction longitudinale X.

Chaque bande de renfort 40 présente une épaisseur supérieure à celle de la bâche d'étanchéité 38. A titre indicatif, chaque bande de renfort 40 présente une épaisseur comprise entre 3 et 10 mm.

Au moins certaines bandes de renfort 40 sont intercalées entre la bâche d'étanchéité 38 et les renforts longitudinaux 30.2 de la structure 30 du plancher 14.

Comme illustré sur la figure 5, au moins une bande de renfort 40 comprend des orifices traversants 42. Au moins certains orifices traversants 42 peuvent être configurés pour loger des éléments de fixation reliant le platelage 32 à la structure 30.

Selon un mode opératoire, la bâche d'étanchéité 38 est rapportée sur la structure 30 avant la mise en place du platelage 32.

L'utilisation d'une bâche d'étanchéité 38 éventuellement renforcée comme deuxième barrière d'étanchéité permet de réduire la masse et les coûts de cette deuxième barrière d'environ 50% par rapport aux plaques de protection de l'art antérieur. La bâche d'étanchéité 38 facilite le montage de la deuxième barrière d'étanchéité et permet de réduire les temps d'intervention sur l'aéronef lors de son assemblage.

## Revendications

1. Plancher d'aéronef comprenant une structure (30), un platelage (32) rapporté sur la structure (30) ainsi que des première et deuxième barrières d'étanchéité (34, 34') superposées au moins au droit d'une zone de protection (ZP), le platelage (32) étant configuré pour former la première barrière d'étanchéité (34) au moins au droit de la zone de protection (ZP), la structure (30) du plancher comportant des poutres transversales (30.1) orientées perpendiculairement à une direction longitudinale (X), espacées entre elles, ainsi que des renforts longitudinaux (30.2) orientés parallèlement à la direction longitudinale (X), espacés entre eux, rapportés sur les poutres transversales (30.1), **caractérisé en ce que** la deuxième barrière d'étanchéité (34') comprend une bâche d'étanchéité (38) intercalée entre le platelage (32) et la structure (30), comportant plusieurs bandes de renfort (40) fixées contre une face (38.1) de la bâche d'étanchéité (38) orientée vers la structure (30), au moins certaines bandes de renfort (40) étant intercalées entre la bâche d'étanchéité (38) et les renforts longitudinaux (30.2) de la structure (30) du plancher.

2. Plancher d'aéronef selon la revendication précédente, **caractérisé en ce que** les bandes de renfort (40) sont rigides ou semi-rigides.

3. Plancher d'aéronef selon l'une des revendications précédentes, **caractérisé en ce que** la bâche d'étanchéité (38) s'étend de manière continue sur toute la zone de protection (ZP).

4. Plancher d'aéronef selon l'une des revendications précédentes, **caractérisé en ce que** la bâche d'étanchéité (38) comprend au moins un pli tissé enduit d'une matière plastique.

5. Plancher d'aéronef selon l'une des revendications précédentes, **caractérisé en ce qu'**au moins une bande de renfort (40) comprend des orifices traversants (42).

6. Aéronef comprenant un plancher selon l'une des revendications précédentes.

7. Aéronef selon la revendication précédente, **caractérisé en ce que** l'aéronef comprend une soute avionique (26) située sous le plancher, la zone de protection (ZP) étant située au-dessus de la soute avionique (26).

## Patentansprüche

1. Boden eines Luftfahrzeugs mit einer Struktur (30), mit einem an der Struktur (30) angebrachten Bodenbelag (32) sowie mit einer ersten und einer zweiten Dichtungsbarriere (34, 34'), die zumindest im Bereich einer Schutzzone (ZP) übereinander angeordnet sind, wobei der Bodenbelag (32) so eingerichtet ist, dass er die erste Dichtungsbarriere (34) zumindest im Bereich der Schutzzone (ZP) bildet, und wobei die Struktur (30) des Bodens Querträger (30.1) aufweist, die im rechten Winkel zu einer Längsrichtung (X) ausgerichtet und voneinander beabstandet sind, sowie Längsverstärkungen (30.2), die parallel zur Längsrichtung (X) ausgerichtet und voneinander beabstandet sind und an den Querträgern (30.1) angebracht sind, **dadurch gekennzeichnet, dass** die zweite Dichtungsbarriere (34') eine Dichtungsplane (38) aufweist, die zwischen dem Bodenbelag (32) und der Struktur (30) eingefügt ist und mehrere Verstärkungsstreifen (40) aufweist, die an einer der Struktur (30) zugewandten Seite (38.1) der Abdichtungsplane (38) angebracht sind, wobei wenigstens einige Verstärkungsstreifen (40) zwischen der Abdichtungsplane (38) und den Längsverstärkungen (30.2) der Struktur (30) des Fußbodens eingefügt sind.

2. Boden eines Luftfahrzeugs nach dem vorhergehenden Anspruch, **dadurch gekennzeichnet, dass** die Verstärkungsstreifen (40) starr oder halbstarr sind.

3. Boden eines Luftfahrzeugs nach einem der vorhergehenden Ansprüche, **dadurch gekennzeichnet, dass** sich die Abdichtungsplane (38) durchgehend über die gesamte Schutzzone (ZP) erstreckt.

4. Boden eines Luftfahrzeugs nach einem der vorhergehenden Ansprüche, **dadurch gekennzeichnet, dass** die Abdichtungsplane (38) wenigstens eine gewebte Lage aufweist, die mit einem Kunststoffmaterial beschichtet ist.

5. Boden eines Luftfahrzeugs nach einem der vorhergehenden Ansprüche, **dadurch gekennzeichnet, dass** wenigstens ein Verstärkungsstreifen (40) Durchgangsöffnungen (42) aufweist.

6. Luftfahrzeug mit einem Boden nach einem der vorhergehenden Ansprüche.

7. Luftfahrzeug nach dem vorhergehenden Anspruch, **dadurch gekennzeichnet, dass** das Luftfahrzeug einen Laderaum (26) aufweist, der sich unter dem Boden befindet, wobei sich die Schutzzone (ZP) oberhalb des Laderaums (26) befindet.

## Claims

1. Aircraft floor comprising a structure (30), a deck (32) attached to the structure (30), and first and second sealing barriers (34, 34') superposed at least in line with a protection zone (ZP), the deck (32) being configured to form the first sealing barrier (34) at least in line with the protection zone (ZP), the structure (30) of the floor having transverse beams (30.1) which are oriented perpendicularly to a longitudinal direction (X) and spaced apart from one another, and longitudinal reinforcements (30.2) which are oriented parallel to the longitudinal direction (X), are spaced apart from one another and are attached to the transverse beams (30.1), **characterized in that** the second sealing barrier (34') comprises a sealing tarpaulin (38) interposed between the deck (32) and the structure (30) and having several reinforcing strips (40) fixed against a face (38.1) of the sealing tarpaulin (38) oriented toward the structure (30), at least some of the reinforcing strips (40) being interposed between the sealing tarpaulin (38) and the longitudinal reinforcements (30.2) of the structure (30) of the floor.

2. Aircraft floor as claimed in the preceding claim, **characterized in that** the reinforcing strips (40) are rigid or semi-rigid.

3. Aircraft floor as claimed in one of the preceding claims, **characterized in that** the sealing tarpaulin (38) extends continuously over the entire protection zone (ZP).

4. Aircraft floor as claimed in one of the preceding claims, **characterized in that** the sealing tarpaulin (38) comprises at least one woven ply coated with a plastic material.

5. Aircraft floor as claimed in one of the preceding claims, **characterized in that** at least one reinforcing strip (40) comprises through-holes (42).

6. Aircraft comprising a floor as claimed in one of the preceding claims.

7. Aircraft as claimed in the preceding claim, **characterized in that** the aircraft comprises an avionics bay (26) situated below the floor, the protection zone (ZP) being situated above the avionics bay (26).
